**Europäisches Patentamt**

(19) **European Patent Office**

**Office européen des brevets**

(11) Veröffentlichungsnummer: **0 103 880**
**B1**

(12) **EUROPÄISCHE PATENTSCHRIFT**

(45) Veröffentlichungstag der Patentschrift:
02.09.87

(51) Int. Cl.⁴: **H 04 B 3/44**

(21) Anmeldenummer: **83109278.8**

(22) Anmeldetag: **19.09.83**

(54) **Fernspeiseweiche für ein Leitungsendgerät eines analogen oder digitalen Nachrichtenübertragungssystems.**

(30) Priorität: **22.09.82 DE 3235111**

(43) Veröffentlichungstag der Anmeldung:
**28.03.84 Patentblatt 84/13**

(45) Bekanntmachung des Hinweises auf die Patenterteilung:
**02.09.87 Patentblatt 87/36**

(84) Benannte Vertragsstaaten:
**AT BE CH DE FR GB IT LI**

(56) Entgegenhaltungen:
**EP-A-0 014 969**
**EP-A-0 066 010**
**DE-B-1 272 466**
**US-A-3 530 393**
**US-A-3 699 272**

(73) Patentinhaber: **Siemens Aktiengesellschaft Berlin und München, Wittelsbacherplatz 2, D-8000 München 2 (DE)**

(72) Erfinder: **Wendt, Peter, Dipl.- Ing., Oblatterwallstrasse 36 c, D-8900 Augsburg (DE)**

## Beschreibung

Die Erfindung betrifft eine Fernspeiseweiche für ein Leitungsendgerät eines analogen oder digitalen Nachrichtenübertragungssystems mit hoher Übertragugsgeschwindigkeit zum Anschluß über einen triaxialen Eingang an eine koaxiale Leitung und an einen Außenleiter eines Kabels, das eine Vielzahl von gegeneinander und gegen den außenleiter isolierten Koaxialleitungen enthält, mit einer mit dem triaxialen Eingang verbundenen Leitungsdrossel und einer nachgeschalteten Eingangsweiche. Dabei soll unter einer hohen Übertragugsgeschwindigkeit eine solche verstanden werden, bei der Frequenzen im Bereich von einigen hundert MHz auftreten.

Analoge und digitale Nachrichtenübertragungssysteme mit hoher Übertragsgeschwindigkeit enthalten zwischen den Leitungsendgeräten eines Übertragungsabschnittes angeordnete Zwischenstellen, in denen Zwischenverstärker oder Regeneratoren angeordnet sind. Diese Zwischenstellen werden über das für die Nachrichtenübertragung vorgesehene Kabel ferngespeist. Die Fernspeisung erfolgt dabei häufig so, daß eine sendende Endstelle zugleich das Fernspeisegerät enthält und der Fernspeisestrom in den Innenleiter der für die eine Übertragungsrichtung vorgesehenen Koaxialleitung über eine sendeseitige Fernspeiseweich eingespeist wird. Im empfangsseitigen Leitungsendgerät wird eine entsprechende Fernspeiseweiche zur Trennung des Signal- und des Versorgungsstroms benötigt, die in der Eingangsanordnung der Empfangsseite angeordnet ist. Im empfangsseitigen Leitungsendgerät wird außerdem eine Schleife für den Fernspeisestrom zum Innenleiter der für die Gegenrichtung verwendeten Koaxialleitung gebildet, über den der Fernspeisestrom zum speisenden Leitungsendgerät zurückfließt. Bei längeren Übertragungsstrecken kann die Schleife für den Fernspeisestrom auch in einer Zwischenstelle gebildet werden, so daß dann beide Leitungsendgeräte oder auch zusätzlich eine Zwischenstelle zur Einspeisung eines Fernspeisestroms verwendet werden. Dabei bilden jeweils die Koaxialleitungen für beide Übertragungsrichtungen der Nachrichten ein Paar, das gleichstrommäßig hintereinandergeschaltet ist. In dem verlegten Kabel sind eine Vielzahl derartiger Koaxialleitungspaare enthalten, außerdem enthalten derartige Kabel als sogenannten Beipack eine Anzahl symmetrischer Leitungen, die für Überwachungszwecke, als Dienstleitungen und für Steuerzwecke Verwendung finden.

Die Koaxialleitungspaare und der Beipack sind gegeneinander isoliert in einem seinerseits demgegenüber isolierten Kabelmantel untergebracht. Der Kabelmantel enthält eine Metallisierung, die als Kabelaußenleiter Verwendung findet und im Hinblick auf den Berührungsschutz und zur wirksamen Abschirmung auf Erdpotential gelegt ist, während die Außenleiter der Koaxialleitungen sich gleichstrommäßig auf Schwebepotential befinden.

Die Schirmwirkung des Kabelaußenleiters ist an sich für die praktische Verwendung ausreichend hoch, über den Beipack können jedoch von den Kabelenden her Störsignale in das Kabel gelangen, die zu zwischen dem Außenleiter der Koaxialleitungen und dem Außenleiter des Kabels auftretenden Störspannungen füren. In diesem Falle überlagern sich die Störspannungen empfangsseitig dem Nutzsignal und wirken besonders bei den erwähnten hohen Übertragungsgeschwindigkeiten für die Signalübertragung störend, da die zur wechselstrommäßigen Verbindung zwischen dem Außenleiter der Koaxialleitung und dem Außenleiter des Kabels am Kabelende angeordneten Kondensatoren keinen idealen Kurzschluß für die Störspannungen bilden.

Aus der EP-A- 0 014 969 ist eine Eingangsanordnung für ein empfangsseitiges Leitungsendgerät eines Nachrichtenübertragungssystems bekannt, bei dem zur Verminderung der oben beschriebenen Störungen LC-Filter aus Leitungsdrosseln und Querkapazitäten verwendet werden. Bei der bekannten Anordnung ist die Koaxialleitung in einem leitenden Gehäuse untergebracht und durch Aufschieben von Ferritringen zu einer Leitungsdrossel ergänzt. Außerdem sind in Abständen zwischen den Ferritringen Querkondensatoren zwischen dem Außenleiter der Koaxialleitung und dem umgebenden Gehäuse vorgesehen. Eine einwandfreie Unterdrückung der Störspannungen bis zu mehreren hundert MHz ergibt sich bei dieser Ausführung aber nur, wenn die Eigeninduktivität und die Zuleitungsinduktivität der Kondensatoren genügend klein gehalten werden kann. Dies ist schwierig, da wegen der Hochspannungsfestigkeit der Kondensatoren Bauformen erforderlich sind, die nicht unbeträchtliche Abmessungen aufweisen. Dadurch kann auch bei der vorgeschlagenen Parallelschaltung mehrerer Kondensatoren die resultierende Induktivität und damit der Koppelwiderstand bei hohen Frequenzen noch unzulässig hoch sein. Zusätzliche Schwierigkeiten ergeben sich dabei aus der Notwendigkeit, die Kondensatoren induktivitätsarm mit dem Außenleiter der Koaxialleitung und dem umgebenden Gehäuse großflächig zu verlöten. Neben unterschiedlicher Ausdehnung der zu verlötenden Flächen kann außerdem durch zusätzlich verwendete Lötbändchen eine gewisse Zuleitungsinduktivität auftreten, die die Wirksamkeit der Kondensatoren abschwächt. Die bekannte Anordnung ist wegen ihrer Abmessungen außerdem schwierig in ein Leitungsendgerät einzubauen.

In der EP-A- 0 066 010, veröffentlicht am 8.12.1982, ist außerdem bereits eine Frequenzweiche zur Trennung eines Signalstroms und eines Versorgungsstroms vorgeschlagen worden, die zur Übertragung des Signalstroms eine homogene Leitung vorsieht, die mit einer inhomogenen Leitung verbunden ist. Die inhomogene Leitung enthält abwechselnd Abschnitte mit sehr niedrigem und mit sehr hohem Wellenwiderstand und dient insgesamt zur Erhöhung der Umlaufdämpfung in einem Zwischenregenerator für digitale Signale sehr hoher Schrittgeschwindigkeit. Zur Verbindung des Innenleiters der Koaxialleitung mit dem Regeneratoreingang wird bei der vorgeschlagenen Frequenzweiche ein Koppelkondensator benötigt, außerdem wird zur wirksamen Entkopplung des Fernspeisestroms ein weiterer Kondensator benötigt, der den Fernspeiseweg mit Bezugspotential verbindet.

Bei der vorliegenden Erfindung besteht die Aufgabe darin, eine Frequenzweiche der eingangs beschriebenen Art so weiterzubilden, daß bei verbesserter Unterdrückung von Störsignalen die Notwendigkeit konzentrierter Bauelemente bei Übertragung von Signalen mit Frequenzanteilen von einigen hundert MHz und insbesondere die Notwendigkeit von Hochspannungskondensatoren entfällt, die beim Stand der Technik aus Gründen des Berührungsschutzes für das in einer oberirdischen Endstelle angeordnete Leitungsendgerät notwendig sind.

Erfindungsgemäß wird die Aufgabe dadurch gelöst, daß mit dem Innenleiter der zur Nachrichtenübertragung verwendeten Koaxialleitung der Innenleiter der Leitungsdrossel und mit dem Außenleiter der Koaxialleitung der Außenleiter der Leitungsdrossel verbunden ist, daß der Außenleiter des Übertragungskabels mit einem Anschluß eines Leitungsfilters verbunden ist, daß dieses Leitungsfilter einen geschirmten keramischen Rohrkörper mit gestuftem Wellenwiderstandsverlauf enthält, daß durch diesen Rohrkörper eine Koaxialleitung geführt ist, deren Innenleiter mit dem Innenleiter der Leitungsdrossel und dessen Außenleiter mit dem Außenleiter der Leitungsdrossel verbunden ist, daß der keramische Rohrkörper innen metallisiert ist und diese Innenmetallisierung wenigstens eingangsseitig mit dem Außenleiter der durch den Rohrkörper geführten Koaxialleitung gut leitend verbunden ist, daß der Rohrkörper an seiner Außenseite aufgebrachte Ferritringe enthält und daß der Rohrkörper an den von den Ferritringen freien Stellen sowie die Ferritringe umhüllend eine Außenmetallisierung enthält, die eingangsseitig mit dem Anschluß des Leitungsfilters für den Kabelaußenleiter verbunden ist und ausgangsseitig mit dem Bezugspotential der Eingangsanordnung verbunden ist, daß eine Übertrageranordnung vorgesehen ist, daß der Außenleiter der Übertrageranordnung eingangsseitig mit Bezugspotential und ausgangsseitig mit einem Anschluß für den Hochpaßweg zur Weitergabe der übertragenen Nachrichtensignale verbunden ist und daß der Innenleiter der Übertrageranordnung eingangsseitig mit dem Ausgangsanschluß des Innenleiters des Leitungsfilters und ausgangsseitig über einen Überspannungsableiter mit Bezugspotential und außerdem mit einem Anschluß für einen Tiefpaßweg verbunden ist. Die erfindungsgemäße Frequenzweiche bietet außerdem den Vorteil, daß sie auch zur Erhöhung der Nebensprechdämpfung in demjenigen Leitungsendgerät eingesetzt werden kann, in dem die Fernspeiseschleife zwischen dem Innenleiter der Koaxialleitungen für die Hin- und für die Gegenrichtung gebildet ist.

Bei hohen Frequenzen ist eine Weiterbildung der erfindungsgemäßen Frequenzweiche zweckmäßig, bei der die Übertrageranordnung wenigstens einen Leitungsübertrager enthält, der mittels einer auf einen Ferritkern aufgewickelten Koaxialleitung oder einer Koaxialleitung mit mehreren aufgesteckten Ferritringen realisiert ist.

Für die Anwendung bei niedrigeren Frequenzen ist eine Variante der erfindungsgemäßen Frequenzweiche zweckmäßig, bei der die Übertrageranordnung mittels konzentrierter Bauelemente realisiert ist und dabei mit dem Innenleiter der Koaxialleitung des Leitungsfilters über die Reihenschaltung eines zweiten und eines dritten Kondensators der Hochpaßanschluß für das Übertragungssignal verbunden ist, daß vom Verbindungspunkt der beiden Kondensatoren eine Spule gegen Bezugsptsensial geschaltet ist, daß vom Innenleiter der Koaxialleitung des Leitungsfilters eine weitere Spule zum Tiefpaßanschluß der Übertrageranordnung geführt ist und parallel zu diesem Tiefpaßanschluß gegen Bezugspotential ein vierter Kondensator und der Überspannungsableiter geschaltet sind.

Zur Erhöhung der Störsicherzeit gegenüber Störspannungen mit einer genau bestimmbaren Frequenz ist eine Weiterbildung der erfindungsgemäßen Frequenzweiche zweckmäßig, bei der die Leitungsdrossel einen auf die Frequenz einer Störkomponente abgestimmten Saugkreis aus der Reihenschaltung eines Kondensators und einer Spule enthält und dieser Saugkreis in die Verbindung zwischen dem Anschluß für den Kabelaußenleiter und die Verbindungsstelle des Außenleiters der Koaxialleitung der Leitungsdrossel und dem Außenleiter der Koaxialleitung des Leitungsfilters eingefügt ist.

Zur besseren Unterdrückung von Signalanteilen sehr hohen Frequenz im Tiefpaßweg ist eine Weiterbildung der erfindungsgemäßen Frequenzweiche zweckmäßig, bei der mit dem Anschluß für den Tiefpaßweg ein Eingang eines Tiefpaßfilters verbunden ist, daß das Tiefpaßfilter mittels eines weiteren keramischen Rohrkörpers mit gestuftem Wellenwiderstandsverlauf realisiert ist und dabei die Innenmetallisierung des keramischen Rohrkörpers eingangsseitig mit dem Anschluß für den Tiefpaßweg der Übertrageranordnung und ausgangsseitig mit einem Anschluß des Leitungsendgerätes verbunden ist, und daß die äußere Metallisierung des keramischen Rohrkörpers eingangsseitig mit Bezugspotential und ausgangsseitig mit einem weiteren Anschluß des Leitungsendgerätes verbunden ist.

Die Erfindung soll im folgenden anhand der Zeichnung näher erläutert werden.

In der Zeichnung zeigt

Fig. 1 eine Eingangsanordnung nach der Erfindung,

Fig. 2 eine alternative Möglichkeit für einen in der Fig. 1 verwendeten Leitungsübertrager für niedrigere Frequenzen.

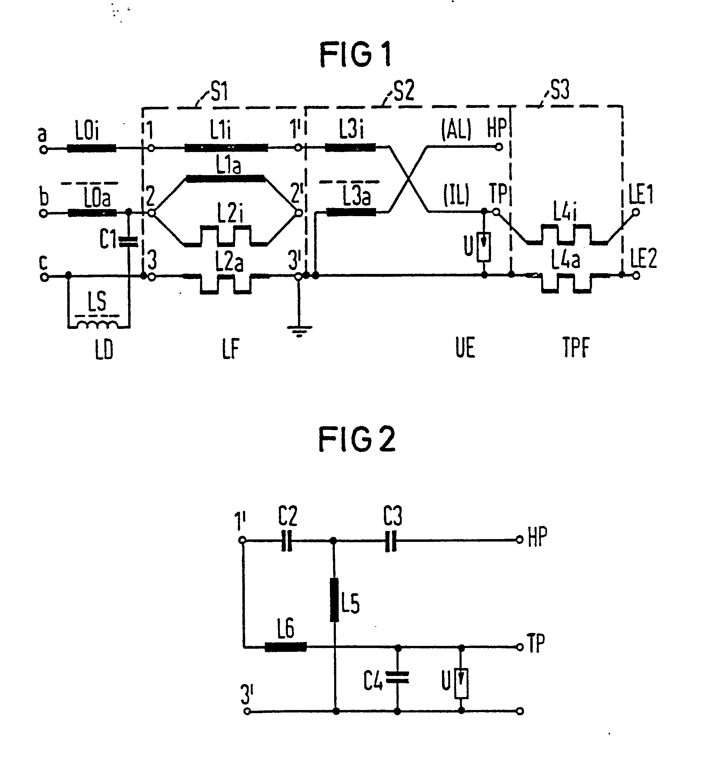

Das in der Fig. 1 gezeigte Ausführungsbeispiel einer Eingangsanordnung stellt eine mittels Leitungsfiltern und Leitungsübertragern aufgebaute Fernspeiseweiche für die Empfangsseite eines Leitungsendgerätes einer digitalen Übertragungsstrecke dar. Über die Eingangsanschlüsse a, b, c ist die Fernspeiseweiche mit dem Übertragungskabel verbunden, dabei ist Anschluß a mit dem Innenleiter und Anschluß b mit dem Außenleiter einer zugeordneten Koaxialleitung verbunden, der Anschluß c ist an den Außenleiter des Übertragungskabeis angeschlossen, die Verbindungen erfolgen dabei über eine triaxiale Steckverbindung.

Am Punkt a ist der Innenleiter L0i und am Punkt b der Außenleiter L0a einer Koaxialleitung angeschlossen, über die ein oder mehrere Ferritringe gesteckt sind oder die auf einen Ferritkern aufgewickelt ist, so daß sich eine Leitungsdrossel LD ergibt. Die Leitungsdrossel enthält zusätzlich zur Ableitung einer bestimmten einzelnen Störfrequenz von dem auf Schwebepotential befindlichen Außenleiter L0a zum Anschluß c des Kabelaußenleiters, der sich auf Erdpotential befindes, einen auf die Störfrequenz abgestimmten Saugkreis. Der Saugkreis ist in bekannter Weise als Serienresonanzkreis mit dem ersten Kondensator C1 und der Saugkreisspule LS aufgebaut.

An die Leitungsdrossel LD schließt sich das Leitungsfilter LF an, das in einer ersten geschirmten Kammer S1 untergebracht ist. Das Leitungsfilter LF besteht aus einem keramischen Rohrkörper, durch den eine Koaxialleitung gesteckt ist. Ein derartiges Leitungsfilter ist bereits in der eingangs genannten EP-A- 0 066 010 vorgeschlagen worden, in der Fig. 3 dieser Anmeldung und der zugehörigen Beschreibung ist ein derartiges Leitungsfilter ausführlich erläutert. Die koaxiaie Leitung, die ein weiteres Stück der für die Leitungsdrossel LD verwendeten Leitung sein kann, ist äußerlich abisoliert, so daß sich zwischen dem Außenleiter L1a der koaxialen Leitung und der Innenmetallisierung L2i des Rohrkörpers ein sicherer Kontakt ergibt, zusätzlich ist an einer Stirnseite des Rohrkörpers der Außenleiter L1a

der koaxialen Leitung mit der Innenmetallisierung des Rohrkörpers verbunden. Auf den Rohrkörper sind außen Ferritringe aufgeschoben, die jeweils von einem leitfähigen Gehäuse umgeben sind. Zwischen den Ferritringen ist die weitere Außerfläche des Rohrkörpers metallisiert, die Außenmetallisierung ist mit den metallischen Gehäusen der Ferritringe verbunden, so daß der Rohrkörper außen durchgehend leitend ist. Durch die aufgeschobenen Ferritringe ergibt sich ein über die Länge des Rohrkörpers stark wechselnder Wellenwiderstand und damit eine starke Dämpfung für Signaie, die zwischen der Innenmetallisierung L2i und der Außenmetallisierung L2a des Rohrkörpers anliegen.

Beim Leitungsfilter LF ist der Innenleiter L1i der Koaxialleitung mit dem Innenleiter L0i der für die Leitungsdrossel verwendeten Koaxialleitung direkt verbunden, auch die Außenleiter L0a und L1a der beiden Koaxialleitungen sind miteinander verbunden, so daß bei der praktischen Ausführung beide Koaxialleitungen aus einem Stück bestehen können.

Die innere Metallisierung L2i des Rohrkörpers ist aufgrund der Bauweise direkt mit dem Außenleiter L1a der Koaxialleitung verbunden, die äußere Metallisierung L2a des Rohrkörpers ist über den Punkt 3 und den Anschluß c mit dem Außenleiter des Übertragungskabels und am anderen Anschluß über den Punkt 3' mit dem Bezugspotential der Fernspeiseweiche verbunden.

An das Leitungsfilter LF schließt sich die Übertrageranordnung UE an, die in einer zweiten geschirmten Kammer S2 untergebracht ist und eine weitere koaxiale Leitung enthält. Der Innenleiter L3i dieser Koaxialleitung ist eingangsseitig mit dem Ausgangsanschluß des Innenleiters L1i der Koaxialleitung des Leitungsfilters LF verbunden, während der Außenleiter L3a der Übertrageranordnung UE eingangsseitig an Bezugspotential angeschlossen ist. Die Leitung der Übertrageranordnung UE ist durch aufgeschobene Ferritringe oder durch Aufwickeln auf einen Ferritkern als Leitungsübertrager ausgebildet. Ausgangsseitig ist der Außenleiter L3a mit einem Anschluß HP für einen Hochpaßweg verbunden, während der Innenleiter L3i über einen Überspannungsableiter U mis Bezugspotential und außerdem direkt mit einem Anschluß TP für einen Tiefpaßweg verbunden ist.

Im Hinblick auf die Funktion der beschriebenen Eingangsanordnung als Fernspeiseweiche wird über den Hochpaßweg das Übertragungssignal weitergeleitet, während über den Tiefpaßweg neben dem Fernspeisestrom niederfrequente Signale weitergeleitet werden. Durch den Aufbau der Übertrageranordnung UE mittels eines Leitungsübertragers als Umkehrübertrager liegt der Anschluß HP für den Hochpaßweg gleichstrommäßig auf Masse, so daß sich für das nachgeschaltete Leitungsendgerät ein sehr guter Berührungsschutz ergibt. Der zum Abbau von Überspannungen erforderliche Überspannungsableiter U liegt am Anschluß TP für den Tiefpaßweg, so daß Rückwirkungen auf den Hochpaßweg aufgrund der Kapazität des Überspannungsableiters U ausgeschlossen werden können.

Zur weiteren Erhöhung der Dämpfung von Störsignalen ist in den Tiefpaßweg ein Tiefpaßfilter TPF eingeschaltet, das in einer dritten geschirmten Kammer S3 untergebracht ist. Dieses Tiefpaßfilter enthält einen auch für das Leitungsfilter LF verwendeten keramischen Rohrkörper mit stufenförmigem Wellenwiderstandsverlauf, allerdings ohne eine durchgehende Koaxialleitung. Die Innenmetallisierung L4i des keramischen Rohrkörpers ist auf der einen Seite mit dem Anschluß TP der Übertrageranordnung verbunden, während sie auf der anderen Seite mit dem Leitungsendgerät über den Anschluß LE1 verbunden ist. Die äußere Metallisierung L4a des Tiefpaßfilters ist auf der einen Seite mit dem Bezugspotential der Fernspeiseweiche verbunden, während sie, auf der anderen Seite mit dem Leitungsendgerät über den weiteren Anschluß LE2 verbunden ist. Bei niedrigen Frequenzen kann unter Verzicht auf die ohmsche Verbindung des Hochpaßweges mit Masse anstelle des Leitungsübertragers in der Übertrageranordnung UE auch die in der Fig. 2 gezeigte Anordnung mit konzentrierten Bauelementen verwendet werden. Mit dem Innenleiter L1i des Leitungsfilters ist am Anschluß 1' über die Reihenschaltung eines zweiten und eines dritten Kondensators C2, C3 der Hochpaßweg angeschlossen, zur Bildung eines T-Gliedes ist die gemeinsame Verbindung der Kondensatoren über eine fünfte Induktivität L5 in Form einer Spule mit Bezugspotential über den Anschluß 3' verbunden. An den Anschluß 1' ist außerdem über eine sechste Induktivität L6 in Form einer Spule der Tiefpaßweg TP angeschlossen, an dessen Eingang parallel zum Überspannungsableiter ein vierter Kondensator C4 als Siebkondensator angeordnet ist.

Die beschriebene Fernspeiseweiche wird im Hinblick auf den geringen Signal-Störabstand mit besonderem Vorteil am Eingang der Empfangsseite eines Leitungsendgerätes verwendet. Wegen der Verbesserung der Nebensprechdämpfung ist ein Einsatz in der Sendeseite eines Leitungsendgerätes aber ebenfalls sinnvoll.

**Patentansprüche**

1. Fernspeiseweiche für ein Leitungsendgerät eines analogen oder digitalen Nachrichtenübertragungssystems mit hoher Übertragungsgeschwindigkeit zum Anschluß über einen triaxialen Eingang an eine koaxiale Leitung (Anschlüsse a, b) und an einen Außenleiter (Aanschluß c) eines Kabels, das eine Vielzahl von gegeneinander und gegen den Außenleiter isolierten Koaxialleitungen enthält, mit einer mit dem triaxialen Eingang verbundenen Leitungsdrossel (LD) und einer nachgeschalteten Eingangsweiche, dadurch gekennzeichnet, daß mit dem Innenleiter (Anschluß a) der zur Nachrichtenübertragung verwendeten Koaxialleitung der Innenleiter (L0i) der Leitungsdrossel (LD) und mit dem Außenleiter (Anschluß b) der Koaxialleitung der Außenleiter (L0a) der Leitungsdrossel (LD) verbunden ist, daß der Außenleiter (Anschluß c) des Übertragungskabels mit einem Anschluß (3) eines Leitungsfilters (LF) verbunden ist, daß dieses Leitungsfilter (LF) einen geschirmten keramischen Rohrkörper mit gestuftem Wellenwiderstandsverlauf enthält, daß durch diesen Rohrkörper eine Koaxialleitung geführt ist, deren Innenleiter (L1i) mit dem Innenleiter (L0i) der Leitungsdrossel (LD) und dessen Außenleiter (L1a) mit dem Außenleiter (L0a) der Leitungsdrossel (LD) verbunden ist, daß der keramische Rohrkörper innen metallisiert ist und diese Innenmetallisierung (L2i) wenigestens eingangsseitig mit dem Außenleiter (L1a) der durch den Rohrkörper geführten Koaxialleitung gut leitend verbunden ist, daß der Rohrkörper an seiner Außenseite aufgebrachte Ferritringe enthält und daß der Rohrkörper an den von den Ferritringen freien Stellen sowie die Ferritringe umhüllend eine Außenmetallisierung (L2a) enthält, die eingangsseitig mit dem Anschluß (3) des Leitungsfilters (LF) für den Kabelaußenleiter verbunden ist und ausgangsseitig mit dem Bezugspotential der Eingangsanordnung verbunden ist, daß eine Übertrageranordnung (UE) vorgesehen ist, daß der Außenleiter (L3a) der Übertrageranordnung (UE) eingangsseitig mit Bezugspotential und ausgangsseitig mit einem Anschluß (HP) für den Hochpaßweg zur Weitergabe der übertragenen Nachrichtensignale verbunden ist und daß der Innenleiter (L3i) der Übertrageranordnung eingangsseitig mit dem Ausgangsanschluß des Innenleiters (L1i) des Leitungsfilters (LF) und ausgangsseitig über einen Überspannungsableiter (U) mit Bezugspotential und außerdem mit einem Anschluß für einen Tiefpaßweg (TP) verbunden ist.

2. Fernspeiseweiche nach Patentanspruch 1, dadurch gekennzeichnet, daß die Übertrageranordnung (UE) wenigstens einen Leitungsübertrager enthält, der mittels einer auf einen Ferritkern aufgewickelten Koaxialleitung oder einer Koaxialleitung mit mehreren aufgesteckten Ferritringen realisiert ist.

3. Fernspeiseweiche nach Patentanspruch 1, dadurch gekennzeichnet, daß die Übertrageranordnung (UE) mittels konzentrierter Bauelemente realisiert ist und dabei mit dem Innenleiter (L1i) der Koaxialleitung des Leitungsfilters (LF) über die Reihenschaltung eines zweiten und eines dritten Kondensators (C2, C3) der Hochpaßanschluß (HP) für das Übertragungssignal verbunden ist, daß vom Verbindungspunkt der beiden Kondensatoren (C2, C3) eine Spule (L3) gegen Bezugspotential geschaltet ist, daß vom Innenleiter (L1i) der Koaxialleitung des Leitungsfiltere (LF) eine weitere Spule (L6) zum Tiefpaßanschluß (TP) der Übertrageranordnung geführt ist und parallel zu diesem Tiefpaßanschluß gegen Bezugspotential ein vierter Kondensator (C4) und der Überspannungsableiter (U) geschaltet sind.

4. Fernspeiseweiche nach Patentanspruch 1, dadurch gekennzeichnet, daß die Leitungsdrossel (LD) einen auf die Frequenz einer Störkomponente abgestimmten Saugkreis aus der Reihenschaltung eines Kondensators (C1) und einer Spule (LS) enthält und dieser Saugkreis in die Verbindung zwischen dem Anschluß (3) für den Kabelaußenleiter und die Verbindungsstelle des Außenleiters (L0a) der Koaxialleitung der Leitungsdrossel und dem Außenleiter (L1a) der Koaxialleitung des Leitungsfilters eingefügt ist.

5. Fernspeiseweiche nach Patentanspruch 1, dadurch gekennzeichnet, daß mit dem Anschluß (TP) für den Tiefpaßweg ein Eingang eines Tiefpaßfilters (TPF) verbunden ist, daß das Tiefpaßfilter mittels eines weiteren keramischen Rohrkörpers mit gestuftem Wellenwiderstandsverlauf realisiert ist und dabei die Innenmetallisierung (L4i) des keramischen Rohrkörpers eingangsseitig mit dem Anschluß (TP) für den Tiefpaßweg der Übertrageranordnung (UE) und ausgangsseitig mit einem Anschluß (LE1) des Leitungsendgerätes verbunden ist, und daß die äußere Metallisierung (L4a) des keramischen Rohrkörpers eingangsseitig mit Bezugspotential und ausgangsseitig mit einem weiteren Anschluß (LE2) des Leitungsendgerätes verbunden ist.

## Claims

1. A remote supply separating filter for a line terminal device of an analogue or digital information transmission system which operates at a high transmission speed for connection via a triaxial input to a coaxial line (terminals a, b) and to an outer conductor (terminal c) of a cable which includes a plurality of coaxial lines which are insulated from one another and from the outer conductor, with a line choke (LD) which is connected to the triaxial input and with a following input separating filter, characterised in that the inner conductor (terminal a) of the coaxial line used to transmit information is connected to the inner conductor (L0i) of the line choke (LD), and the outer conductor (terminal b) of the coaxial line is connected to the outer conductor (L0a) of the line choke (LD), that the outer conductor (terminal c) of the transmission cable is connected to a terminal (3) of a line filter (LF), that this line filter (LF) includes a screened, ceramic tubular body having a stepped surge impedance path, that a coaxial line leads through this tubular body, where the inner conductor (L1i) of said coaxial line is connected to the inner conductor (L0i) of the line choke (LD) and its outer conductor (L1a) is connected to the outer conductor (L0a) of the line choke (LD), that the ceramic tubular body is internally metallised and at least at its input end this internal metallisation (L2i) is highly conductively connected to the outer conductor (L1a) of the coaxial line which leads through the tubular body, that the tubular body includes ferrite rings applied to its exterior and that the tubular body includes an external metallisation (L2a) at those locations which are free of the ferrite rings and encasing the ferrite rings, where said external metallisation is connected at its input end to the terminal (3) of the line filter (LF) for the cable outer conductor and at its output end is connected to the reference potential of the input arrangement, that a transformer arrangement (UE) is provided, that the outer conductor (L3a) of the transformer arrangement (UE) is connected at its input end to reference potential and at its output end to a terminal (HF) for the high-pass filter path for the forwarding of the transmitted information signals, and that the inner conductor (L3i) of the transformer arrangement is connected at its input end to the output terminal of the inner conductor (L1i) of the line filter (LF) and is connected at its output end to reference potential via a surge voltage arrester (U) and is also connected to a terminal for a low-pass filter path (TP).

2. A remote supply separating filter as claimed in claim 1, characterised in that the transformer arrangement (UE) includes at least one line transformer which comprises a coaxial line wound onto a ferrite core or a coaxial line to which a plurality of ferrite rings are applied.

3. A remote supply separating filter as claimed in patent claim 1, characterised in that the transformer arrangement (UE) comprises lumped components, where the inner conductor (L1i) of the coaxial line of the line filter (LF) is connected via the series arrangement of a second and third capacitor (C2, C3) to the high-pass filter terminal (HF) for the transmission signal, that a coil (L5) is connected from the connection point of the two capacitors (C2, C3) to reference potential, that a further coil (L6) leads from the inner conductor (L1i) of the coaxial line of the line filter (LF) to the low-pass filter terminal (TF) of the transformer arrangement and that a fourth capacitor (C4) and the surge voltage arrester (U) are connected in parallel to this low-pass terminal to reference potential.

4. A remote supply separating filter as claimed in claim 1, characterised in that the line choke (LD) includes an acceptor circuit which is tuned to the frequency of an interference component and which comprises a series arrangement of a capacitor (C1) and a coil (LS) and that this acceptor circuit is interposed into the connection between the terminal (3) for the cable outer conductor and the connection point of the outer conductor (L0a) of the coaxial line of the line choke and the outer conductor (L1a) of the coaxial line of the line filter.

5. A remote supply separating filter as claimed in patent claim 1, characterised in that the terminal (TP) for the low-pass filter path is connected to an input of a low-pass filter (TPF), that the low-pass filter comprises a further ceramic tubular body which has a stepped surge impedance path, where the inner metallisation (L4i) of the ceramic tubular body is connected at its input end to the terminal (TF) for the low-pass filter path of the transformer arrangement (UE) and at its output end to a terminal (LE1) of the line terminal device, and that the external metallisation (L4a) of the ceramic tubular body is connected at its input end to reference potential and at its output end to a further terminal (LE2) of the line terminal device.

**Revendications**

1. Circuit d'aiguillage pour l'alimentation à distance d'un appareil terminal de ligne d'un système analogique ou numérique de transmission d'informations fonctionnant avec une vitesse élevée de transmission, pour le raccordement par l'intermédiairs d'une entrée triaxiale à une ligne coaxiale (bornes a, b) et un conducteur extérieur (borne c) d'un câble, qui contient une multiplicité de lignes coaxiales isolées les unes par rapport aux autres et par rapport au conducteur extérieur, et comportant une bobine d'arrêt de ligne (LD) reliée à l'entrée triaxiale et un circuit d'aiguillage d'entrée branché en aval, caractérisé par le fait que le conducteur intérieur (L0i) de la bobine d'arrêt de ligne (LD) est relié au conducteur intérieur (bande a) de la ligne coaxiale utilisée pour la transmission d'informations et le conducteur extérieur (L0a) de la bobine d'arrêt de ligne (LD) est relié au conducteur extérieur (borne b) de la ligne coaxiale, que le conducteur extérieur (borne c) du câble de transmission est relié à une borne (3) d'un filtre de ligne (LF), que cette ligne (LF) contient un corps tubulaire céramique blindé, dont l'impédance caractéristique possède une variation échelonnée, que dans ce corps tubulaire s'étend une ligne coaxiale dont le conducteur intérieur (L1i) est relié au conducteur intérieur (L0i) de la bobine d'arrêt de ligne (LD) et dont le conducteur extérieur (L1a) est relié au conducteur extérieur (L0e) de la bobine d'arrêt de ligne (LD), que le corps tubulaire céramique est métallisé intérieurement et que cette métallisation intérieure (L2i) est reliée d'une manière bien conductrice, au moins du côté entrée, au conducteur extérieur (L1a) de la ligne coaxiale traversant le corps tubulaire, que le corps tubulaire contient des anneaux de ferrite disposés sur sa face extérieure et que le corps tubulaire contient une métallisation extérieure (L2a), qui est disposée aux emplacements exempts d'anneaux de ferrite et enveloppe ces derniers et est reliée, côté entrée, à la borne (3) du filtre de ligne (LF) pour le conducteur extérieur du câble et est reliée, côté sortie, au potentiel de référence du dispositif d'entrée, qu'il est prévu un dispositif translateur (UE), que le conducteur extérieur (L3a) du dispositif translateur (UE) est relié, côté entrée, au potentiel de référence et, côté sortie, à une borne (HP) pour la voie formant filtre passe-haut, utilisée pour la retransmission des signaux d'information transmis, et que le conducteur intérieur (L3i) du dispositif translateur est relié, côté entrée, à la borne de sortie du conducteur intérieur (L1i) du filtre de ligne (LF) et, côté sortie, par l'intermédiaire d'un dispositif (U) dérivant les surtensions, au potentiel de référence et en outre à une borne pour une voie (TP) formant filtre passe-bas.

2. Circuit d'aiguillage d'alimentation à distance suivant la revendication 1, caractérisé par le fait que le dispositif translateur (UE) contient au moins un translateur de ligne, qui est réalisé au moyen d'une ligne coaxiale enroulée sur un noyau de ferrite ou au moyen d'une ligne coaxiale sur laquelle sont emmanchés plusieurs anneaux de ferrite.

3. Circuit d'aiguillage d'alimentation à distance suivant la revendication 1, caractérisé par le fait que le dispositif translateur (UE) est réalisé au moyen de composants concentrés et que la borne (HP) de filtre passe-haut pour le signal de transmission est reliée au conducteur intérieur (L1i) de la ligne coaxiale du filtre de ligne (LF) par l'intermédiaire d'un montage série formé d'un second et d'un troisième condensateurs (C2, C3), qu'une bobine (L5) relie le point de jonction des deux condensateurs (C2, C3) au potentiel de référence, qu'une autre bobine (L6) relie le conducteur intérieur (L1i) de la ligne coaxiale du filtre de ligne (LF) à la borne (TP) de filtre passe-bas du dispositif translateur et qu'un quatrième condensateur (C4) et le dispositif (U) de dérivation des surtensions sont branchés en parallèle entre cette borne de filtre passe-bas et le potentiel de référence.

4. Circuit d'aiguillage d'alimentation à distance suivant la revendication 1, caractérisé par le fait que la bobine d'arrêt de ligne (LD) contient un circuit d'absorption qui est réglé sur la fréquence d'une composante parasite et est formé par le circuit série constitué par un condensateur (C) et une bobine (LS), et que ce circuit d'absorption est inséré dans la liaison entre la borne (3) pour le conducteur extérieur du câble et le point de jonction du conducteur extérieur (L0a) de la ligne coaxiale de la bobine d'arrêt de ligne et le conducteur extérieur (L1a) de la ligne coaxiale du filtre de ligne.

5. Circuit d'aiguillage d'alimentation à distance suivant la revendication 1, caractérisé par le fait qu'une entrée du filtre passe-bas (TPF) est reliée à la borne (TP) pour la voie formant filtre passe-bas, que le filtre passe-bas est réalisé au moyen d'un autre corps céramique tubulaire, dont l'impédance caractéristique possède une variation échelonnée, et que la métallisation intérieure (L4i) du corps tubulaire céramique est reliée, côté entrée, à la borne (TP) pour la voie formant filtre passe-bas du dispositif translateur (UE) et, côté sortie, à une borne (LE1) de l'appareil terminal de ligne, et que la métallisation extérieure (L4a) du corps tubulaire céramique est reliée, côté entrée, au potentiel de référence et, côté sortie, à une autre borne (LE2) de l'appareil terminal de ligne.

# FIG 1

# FIG 2